# EUROPÄISCHE PATENTANMELDUNG

(11) **EP 0 824 129 A2**
(43) Veröffentlichungstag der Anmeldung: **18.02.1998**
(21) Anmeldenummer: 97113279.0
(22) Anmeldetag: 01.08.1997
(51) Int. Cl.: C08J 9/00, C08J 9/12

(54) **Durch Extrusion hergestellte Schaumstoffplatten**

(30) Priorität: 12.08.1996 DE 19632439
(71) Anmelder: BASF AKTIENGESELLSCHAFT, 67056 Ludwigshafen (DE)
(72) Erfinder: Turznik, Gerhard, Dr., 67269 Grünstadt (DE); Alicke, Gerhard, 67549 Worms (DE)

(57) **Zusammenfassung**

Die Erfindung betrifft durch Extrusion hergestellte Schaumstoffplatten mit einer Dichte von 20 bis 200 g · 1⁻¹ und einer Dicke von mindestens 20 mm auf Basis von Styrolpolymerisaten, dadurch gekennzeichnet, daß sie 0,2 bis 5 Gew.-% eines bromhaltigen Flammschutzmittels und 0,01 bis 1 Gew.-% Magnesiumhydroxid enthalten.

## Beschreibung

Schaumstoffe aus Styrolpolymerisaten werden nach einem bekannten Verfahren hergestellt durch Aufschmelzen des Kunststoffs in einem Extruder, Vermischen mit einem flüchtigen Treibmittel, Auspressen der Mischung an die Umgebungsatmosphäre und Abkühlen. Durch Zusatz von organischen Halogenverbindungen werden solche Schaumstoffe üblicherweise selbstverlöschend ausgerüstet. Die meisten der in Frage kommenden Bromverbindungen neigen bei Temperaturen oberhalb von etwa 180°C zur Zersetzung. Die Zersetzungsprodukte sind korrosiv und schädigen die Extrusionsanlagen. Darüberhinaus führt der Abbau der eingesetzten Bromverbindung zu einer Verminderung der flammhemmenden Wirkung.

Der Erfindung lag nun die Aufgabe zugrunde, das beschriebene System zu stabilisieren, damit höhere Extrusionstemperaturen möglich werden, ohne daß die Anlage und der Schaumstoff geschädigt werden.

Diese Aufgabe wird gelöst, wenn man dem System 0,01 bis 1 Gew.-%, bezogen auf das Styrolpolymerisat, Magnesiumhydroxid zusetzt.

Gegenstand der Erfindung sind demzufolge durch Extrusion hergestellte Schaumstoffplatten mit einer Dichte von 20 bis 200 g · 1⁻¹ und einer Dicke von mindestens 20 mm, vorzugsweise mindestens 30 mm auf Basis von Styrolpolymerisaten, die 0,2 bis 5 Gew.-% eines bromhaltigen Flammschutzmittels und 0,01 bis 1 Gew.-% Magnesiumhydroxid enthalten.

In der DE-A 43 18 743 ist ein Verfahren zur Herstellung von Schaumfolien einer Dicke von 1 bis 10 mm beschrieben, bei dem eine Flammschutzmittel enthaltende Polystyrolschmelze mit Hilfe von Propan oder Butan als Treibmittel verschäumt wird. Als Flammschutzmittel werden u.a. Hexabromcyclododecan und Magnesiumhydroxid genannt. Von einem gemeinsamen Zusatz dieser Substanzen oder gar von einer stabilisierenden Wirkung des Magnesiumhydroxids auf die Bromverbindung ist nicht die Rede.

In der EP-A 372 343 ist die Herstellung von Polystyrol-Schaumstoffplatten durch Extrusion beschrieben, wobei bis zu 2 Gew.-% Hexabromcyclododecan als Flammschutzmittel und bis zu 0,1 Gew.-% Magnesiumoxid, welches das Flammschutzmittel aktivieren soll, zugesetzt werden. Es hat sich überraschenderweise gezeigt, daß Magnesiumoxid in wesentlich gereingerem Maße als Magnesiumhydroxid die Zersetzung der Bromverbindung hemmt.

Styrolpolymerisate im Sinne dieser Erfindung sind Polystyrol und Mischpolymerisate des Styrols, die mindestens 50 Gew.-% Styrol einpolymerisiert enthalten. Als Comonomere kommen z.B. in Betracht α-Methylstyrol, kernhalogenierte Styrole, kernalkylierte Styrole, Acrylnitril, Ester der (Meth)acrylsäure von Alkoholen mit 1 bis 8 C-Atomen, N-Vinylverbindungen wie Vinylcarbazol, Maleinsäureanhydrid oder auch geringe Mengen an Verbindungen, die zwei polymerisierbare Doppelverbindungen enthalten wie Butadien, Divinylbenzol oder Butandioldiacrylat.

Als Treibmittel können die üblichen flüchtigen organischen Verbindungen wie Fluorchlorkohlenwasserstoffe, Fluorkohlenwasserstoffe, Kohlenwasserstoffe, Alkohole, Ketone und Ether verwendet werden. Bevorzugt sind jedoch halogenfreie Treibmittel und Treibmittelgemische, z.B. anorganische Gase wie Kohlendioxid, Stickstoff, Argon und Ammoniak, gegebenenfalls im Gemisch mit Alkoholen, Kohlenwasserstoffen und Ethern.

Die Treibmittelmenge liegt zwischen 3 und 15 Gew.-%, vorzugsweise zwischen 6 und 12 Gew.-%, bezogen auf das Styrolpolymerisat.

Als Flammschutzmittel sind vorzugsweise solche Bromverbindungen geeignet, die bei hohen Temperaturen stabil sind, z.B. Hexabromcyclododecan, Pentabrommonochlorcyclohexan und Chlorparaffine. Sie werden in Mengen von 0,2 bis 5 Gew.-%, vorzugsweise von 0,5 bis 2,5 Gew.-%, bezogen auf das Styrolpolymerisat, eingesetzt.

Ferner können übliche Zusatzstoffe, wie z.B. Keimbildungsmittel zur Steuerung der Zellgröße, Farbstoffe, Füllstoffe oder auch Flammschutzsynergisten zugesetzt werden.

Als Stabilisator wird erfindungsgemäß 0,01 bis 1 Gew.-%, vorzugsweise 0,05 bis 0,5 Gew.-% Magnesiumhydroxid zugesetzt.

Der Stabilisator wird zweckmäßigerweise zusammen mit der Bromverbindung und dem Treibmittel als batch in Polystyrol der Schmelze des Styrolpolymerisats zugesetzt. Das Vermischen erfolgt üblicherweise bei Temperaturen zwischen 180°C und 250°C, bevorzugt zwischen 200 und 240°C, auf üblichen Einwellen- oder Zweiwellenextrudern. Die Mischung wird durch eine Düse aus dem Extruder ausgepreßt, wobei das Treibmittel verdampft und den Kunststoff expandiert. Es entsteht ein Schaumstoff, dessen Querschnitt je nach der Form der Düse rund oder rechteckig sein kann. Durch Abkühlen stabilisiert sich der Schaumstoff.

Die im Beispiel genannten Teile und Prozente beziehen sich auf das Gewicht.

### Beispiel

100 Teile Polystyrol und 2,5 Teile eines Batchs, bestehend aus 45 Teilen Polystyrol, 50 Teilen Hexabromcyclododecan und 5 Teilen Magnesiumhydroxid, werden einem Extruder mit einem mittleren Schneckendurchmesser von 53 mm kontinuierlich zugeführt und aufgeschmolzen. Durch eine Einlaßöffnung wurde ein Treibmittelgemisch aus 3,5 Teilen CO₂ und 3,0 Teilen Ethanol kontinuierlich eingedrückt und in die Schmelze eingemischt.

Das im Extruder gleichmäßig geknetete Schmelze-Treibmittelgemisch wurde dann einem zweiten Extruder mit einem Schneckendurchmesser von 90 mm zugeführt und dort während einer Verweilzeit von etwa 10 min auf die zu Schäumen günstige Temperatur von 90 bis 100°C abgekühlt. Die gekühlte Schmelze wurde sodann durch eine Schlitzdüse von 50 mm x 1,5 mm in die Atmosphäre extrudiert. Der dabei entstandene Schaum wurde durch ein teflonbeschichtetes Werkzeug zu Platten einer möglichst großen Dicke geformt. Es wurden gleichmäßige, geschlossenzellige und formstabile Polystyrolschaumstoffkörper erhalten.

Die so erhaltenen Schaumstoffplatten wurden auf Zersetzungsprodukte des Hexabromcyclododecans untersucht. Es zeigte sich, daß der Zusatz von Magnesiumhydroxid die Zersetzung von Hexabromcyclododecan deutlich verlangsamt.

## Patentansprüche

1. Durch Extrusion hergestellte Schaumstoffplatten mit einer Dichte von 20 bis 200 g · 1⁻¹ und einer Dicke von mindestens 20 mm auf Basis von Styrolpolymerisaten, dadurch gekennzeichnet, daß sie 0,2 bis 5 Gew.-% eines bromhaltigen Flammschutzmittels und 0,01 bis 1 Gew.-% Magnesiumhydroxid enthalten.

2. Schaumstoffplatten nach Anspruch 1, dadurch gekennzeichnet, daß das Flammschutzmittel Hexabromcyclododecan ist.

3. Verfahren zur Herstellung der Schaumstoffplatten nach Anspruch 1, dadurch gekennzeichnet, daß man das Styrolpolymerisat in einem Extruder aufschmilzt, 3 bis 15 Gew.-% eines flüchtigen Treibmittels, 0,2 bis 5 Gew.-% des Flammschutzmittels und 0,01 bis 1 Gew.-% Magnesiumhydroxid zumischt, die Mischung an die Atmosphäre auspreßt und dabei aufschäumt.
